# NEUE EUROPÄISCHE PATENTSCHRIFT

(11) **EP 0 616 934 B2**
(45) Veröffentlichungstag und Bekanntmachung des Hinweises auf die Entscheidung über den Einspruch: **11.10.2000**
(45) Hinweis auf die Patenterteilung: 14.05.1997
(21) Anmeldenummer: 94103281.5
(22) Anmeldetag: 04.03.1994
(51) Int. Cl.: B61D 1/06, B62D 31/04

(54) **Lifteinbau in einem mehrstöckigen Schienenfahrzeug**
Elevator installation in a multiple deck railway vehicle
Installation d'un ascenseur dans un véhicule ferroviaire à plusieurs niveaux

(30) Priorität: 24.03.1993 DE 4309583
(43) Veröffentlichungstag der Anmeldung: 28.09.1994
(73) Patentinhaber: Talbot GmbH & Co. KG, 52070 Aachen (DE)
(72) Erfinder: Heinze, Dieter, Dipl.-Ing., NL-6465 EK Kerkrade (NL); Ahlborn, Martin, Dipl.-Ing. (FH), D-52080 Aachen (DE); Giese, Konrad, Dr.-Ing., D-52076 Aachen (DE); Priebe, Thorsten, D-52249 Eschweiler (DE)

(56) Entgegenhaltungen:
- AT-B- 221 573
- US-A- 4 053 317

## Beschreibung

Die Erfindung bezieht sich auf ein mehrstöckiges Schienenfahrzeug mit einem Lifteinbau mit den Merkmalen des Oberbegriffs des Patentanspruchs 1.

Diese Merkmale sind bekannt aus AT-B-221 573, die einen Lifteinbau im zweistöckigen Servicebereich eines im Fahrgastbereich einstöckigen Eisenbahn-Speisewagens beschreibt. Der darin installierte Aufzug verbindet einen Wirtschaftsraum, eine Küche und ein Buffet. Seine Zugangsöffnungen liegen in Reichhöhe des Personals deutlich oberhalb des Bodens der jeweils angefahrenen Ebenen. Die vom Seitengang ausgehenden Treppen zum Erreichen der beiden Servicebereich-Etagen sind vom Liftschacht entfernt eingebaut.
Der Aufzug ist zum Befahren mit Gegenständen wie Minibars, Rollstühlen oder Gepäck zwischen übereinanderliegenden Fahrgastraum-Ebenen weder vorgesehen noch geeignet.

Minibar werden kleine, handschiebbare Servicefahrzeuge genannt, mit denen den Fahrgästen am Sitzplatz eine Versorgung mit Getränken und kleinen Speisen angeboten werden kann. In DE-Z "ZEV-Glasers Annalen" 114 (1990), Seiten 15 ff. wird in einem Aufsatz von N. Zeevenhoven über "Doppelstockwagen für den Einsatz im Eisenbahnverkehr" unter anderem (Seite 19, rechte Spalte) festgestellt, daß ein Minibarservice in einem Zug mit Doppelstockwagen das Vorhandensein von zusammenfaltbaren Treppenlifts erfordere.

Abgesehen von der relativ umständlichen Handhabung eines solchen klappbaren Schrägaufzugs besteht für die Zeit seiner Benutzung durch eine Minibar oder dgl. eine Behinderung der Fahrgäste beim Begehen der betreffenden Treppe. Andererseits könnte eine solche Anordnung bei entsprechender Auslegung auch als Rollstuhllift mitbenutzt werden.

Mehrstöckige Schienenfahrzeuge gibt es in verschiedenen Varianten, z. B. solche, bei denen ein Einstiegsraum über dem Fahrwerk bzw. Drehgestell und daher relativ hoch liegt, so daß Treppen sowohl in das Unter- als auch in das Oberdeck geführt werden müssen. Bei anderen Fahrzeugen dieser Bauart liegt der Einstiegsraum im Unterdeck, so daß eine Treppe ins Oberdeck und ggf. eine kurze Treppe zum endseitigen Wagenübergang genügt (vgl. DE-Z "ZEV-Glasers Annalen" 108 (1984), N. Zeevenhoven: ""Plädoyer" für die Einführung von Doppelstockwagen ...", Seiten 204 - 215).

Der Rohbau dieser Fahrzeuge muß gerade im Bereich der Übergangsschrägen zwischen dem Boden bzw. der Ebene des endseitigen Wagenübergangs und ggf. Einstiegsraums und dem Unterdeck relativ aufwendig und sorgfältig konstruiert werden, um eine steife Struktur und eine gleichmäßige Krafteinleitung zu erreichen. Dort kommen wesentliche Anteile der fahrwerk- bzw. drehgestellseitigen Tragkräfte (z-Richtung) und der Zug- und Stoßkräfte von Kupplungen und Puffern (x-Richtung) auf.

In der Übergangsschräge sind bei bekannten Doppelstockwagen schon Dreiecksbleche im Bereich der nach oben bzw. nach unten führenden Treppen, also etwa in die vertikale Längsmittelebene des Fahrzeugs, eingebaut worden, um eine Längskrafteinleitung auch in den Zwischenboden zwischen den Fahrgastraum-Decks zu erreichen (vgl. auch DE 33 15 811 A1).

Bei bisher bekannten Doppelstockwagen wird die Übergangsschräge mit einem zwischen den Außenwänden durchgehenden gesickten Blech abgedeckt.

Auch wurden bisher zur Aussteifung des Außenumfangs der Rohbaustruktur in Fahrzeugquerrichtung (y-Richtung) in beiden Decks Blechwände vorgesehen, die die tragenden Teile der Stirnwände der oberen und unteren Fahrgasträume bilden. Diese Blechwände sind jeweils paarweise an den Innenwänden und der Decke bzw. dem Boden des Rohbaus randseitig festgelegt und lassen nur in Fahrzeugmitte genügend Platz für den Durchgang von Personen.

Die Erfindung hat nun die Aufgabe, einen Lifteinbau der eingangs genannten Art so weiterzubilden, daß eine befahrbare Verbindung zwischen verschiedenen, durch Treppen verbundenen Fahrgastraumebenen gebildet wird, wobei die Benutzung der Treppen durch Fahrgäste nicht behindert und das Abstellen z. B. einer Minibar außerhalb des von den Fahrgästen regulär begehbaren Raums ermöglicht wird.

Diese Aufgabe wird erfindungsgemäß mit den kennzeichnenden Merkmalen des Patentanspruchs 1 gelöst. Die kennzeichnenden Merkmale der Unteransprüche geben vorteilhafte Weiterbildungen der Erfindung an.

Ein wesentliches Merkmal des erfindungsgemäßen Lifteinbaus mit vertikalem Verlauf des Liftschachts ist dessen Anordnung unmittelbar neben einer Treppe zwischen den Ebenen, wobei letztere direkt über je mindestens eine Zugangsöffnung des Liftschachts miteinander verbunden sind, deren Unterkanten annähernd auf dem Niveau des angrenzenden Innenbodens liegen. Der im Querschnitt kastenförmige Liftschacht kann in der Wagenkasten-Struktur eine tragfähige Verbindung zwischen dem Unterboden und dem Fahrzeugdach herstellen und somit z. B. die erwähnten Trennwände ersetzen. Der Lifteinbau ist vornehmlich für Personenwagen vorgesehen, jedoch nicht grundsätzlich auf solche beschränkt; auch Güterwagen werden mehrstöckig ausgeführt und können je nach dem zu befördernden Gut prinzipiell auch mit einer Hebevorrichtung der hier erörterten Art versehen werden.

Besonders zweckmäßig und platzökonomisch kann der vertikale Liftschacht zwischen zwei Treppen angeordnet werden, die von einem endseitigen Einstiegsraum jeweils in das Unterdeck und das Oberdeck führen; hierbei ist natürlich auch für die Einstiegsraumebene eine Zugangsöffnung vorzusehen, die sich auf der den Zugangsöffnungen der beiden Decks gegenüberliegenden Stirnseite des Schachts befindet.

Um den verfügbaren Platz in den (Fahrgast-)Räumen möglichst wenig einzuschränken, kann der Unterteil des Liftschachts in einer besonders vorteilhaften Anordnung in die bereits erwähnte Übergangsschräge eingefügt werden. Der Schachtboden muß etwa auf dem Niveau des Unterdeckbodens liegen. Hierbei kann je nach Drehgestellbauart - wenn dieses zur Wagenmitte hin keinen Kopfträger hat - auch noch der Raum zwischen den Radscheiben des inneren Radsatzes teilweise ausgenutzt werden.

Prinzipiell eignet sich die in dem Liftschacht zu führende Hebevorrichtung für Gegenstände aller Art, also auch für Gepäck der Reisenden; für den Transport von Personen dürften hingegen die noch verfügbaren Räume nicht ausreichen, obwohl z. B. klappbare Rollstühle durchaus damit befördert werden könnten.

Auf die Liftsteuerung und die Ausführung und Dimensionierung der Hebeeinrichtung wird hier nicht näher eingegangen; es sei nur soviel angemerkt, daß ein Hubgewicht von ca. 150 kg vorgesehen ist und daß der Antrieb in den oberen Teil des Liftschachts unterhalb des Fahrzeugdachs eingebaut werden kann.

Weitere Einzelheiten und Vorteile des Gegenstands ergeben sich aus der Zeichnung eines Ausführungsbeispiels und dessen folgender detaillierter Beschreibung.

Es zeigen
- Figur 1: eine Seitenansicht eines Endbereichs eines Doppelstockwagens zur Personenbeförderung, aus der die Anordnung eines Liftschachts im Bereich von Treppen zwischen den beiden Fahrgastraumebenen hervorgeht,
- Figur 2: eine Querschnittansicht der Rohbaustruktur im Bereich des Liftschachts (Schnittlinie II-II in Figur 1)
- Figur 2a: eine Detailansicht in Form eines Schnitts entlang Linie A-A in Figur 2,
- Figur 3: eine Stirnansicht des Fahrzeugs mit in Figur 1 durch Pfeil "III" angedeuteter Blickrichtung und
- Figur 3a: eine Schnittdarstellung der Einbindung des Unterteils des Liftschachts in die Tragstruktur des Doppelstockwagens entlang Linie A-A in Fig. 3.

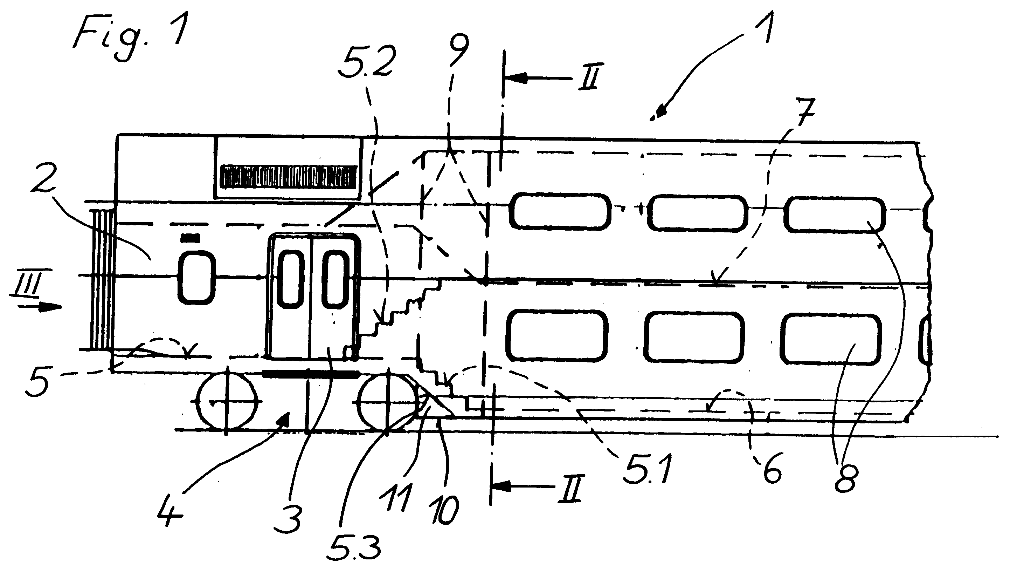

Ein als Doppelstockwagen 1 ausgeführtes, in **Figur 1** aus Symmetriegründen nur etwa zur Hälfte skizziertes Schienenfahrzeug zur Personenbeförderung hat in einem Endbereich 2 einen durch Türen 3 von außen zugänglichen Einstiegsraum oberhalb eines hier nur durch die Umrisse der Radscheiben angedeuteten zweiachsigen Fahrwerks (Drehgestells) 4. Der Boden des Einstiegsraums liegt auf einer mittleren Ebene 5 zwischen einem Unterdeck 6 und einem Oberdeck 7. Von hier führt eine erste Treppe 5.1 nach unten und eine zweite Treppe 5.2 nach oben. Beide Decks 6 und 7 sind als Fahrgasträume mit Fenstern 8 ausgestattet. Der Endbereich 2 umfaßt an seiner Stirnseite den Wagenübergang oder ggf. einen Führerstand.

Die nach unten führende erste Treppe 5.1 liegt auf einer Übergangsschräge 5.3 vom Boden der mittleren Ebene 5 zum Boden des Unterdecks 6, die möglichst nah an den Lichtraum für das Fahrwerk 4 herangeführt ist, um die verfügbare Länge des Unterdecks zwischen den Fahrwerken zu maximieren. Durch zwei gestrichelte parallele vertikale Linien ist die Position eines Liftschachts 9 im Wagenkasten angedeutet, der im Umriß als quaderförmiger Kasten aus Blechwänden mit Versteifungsprofilen ausgeführt ist. In Fahrzeuglängsrichtung (x-Richtung) gesehen steht der Liftschacht 9 genau in der Übergangsschräge 5.3, wobei sein Innenraum diese durchdringt.

Ein unterer Boden 10 des Liftschachts 9 ragt über die Übergangsschräge 5.3 nach unten in den Lichtraum für das Fahrwerk 4 bis in den zwischen den Radscheiben des inneren Radsatzes gebildeten Zylinderraum. Er bildet den unterseitigen Abschluß eines an die Übergangsschräge 5.3 von unten her angesetzten prismatischen Bodenkastens 11 (Fig. 3a).
Letzterer darf das freie Ausdrehen des Drehgestell-Fahrwerks 4 nicht behindern. Bei (Antriebs-)Drehgestellen, die kopfseitige Querträger haben, müßte der Liftschacht in x-Richtung näher zur Fahrzeugmitte hin gesetzt werden.

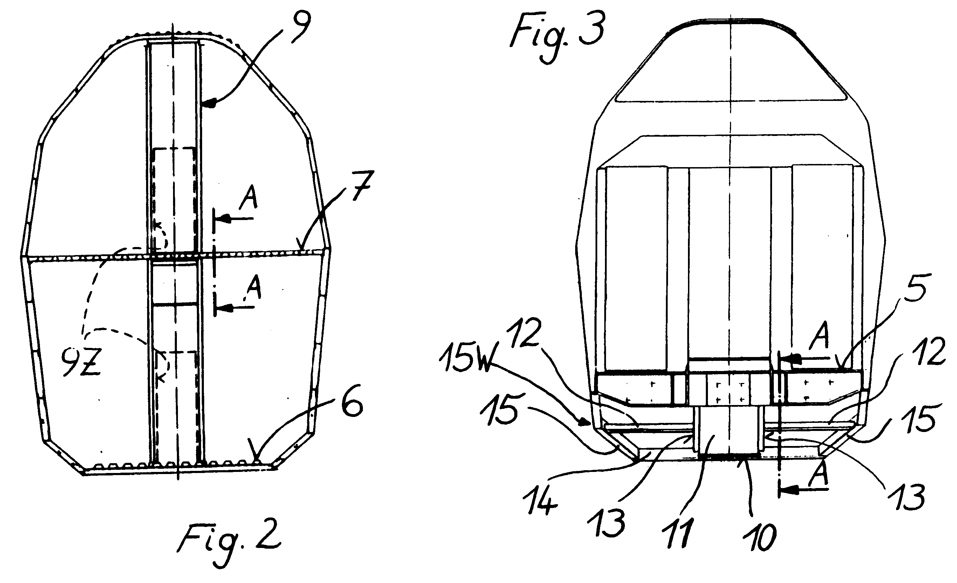

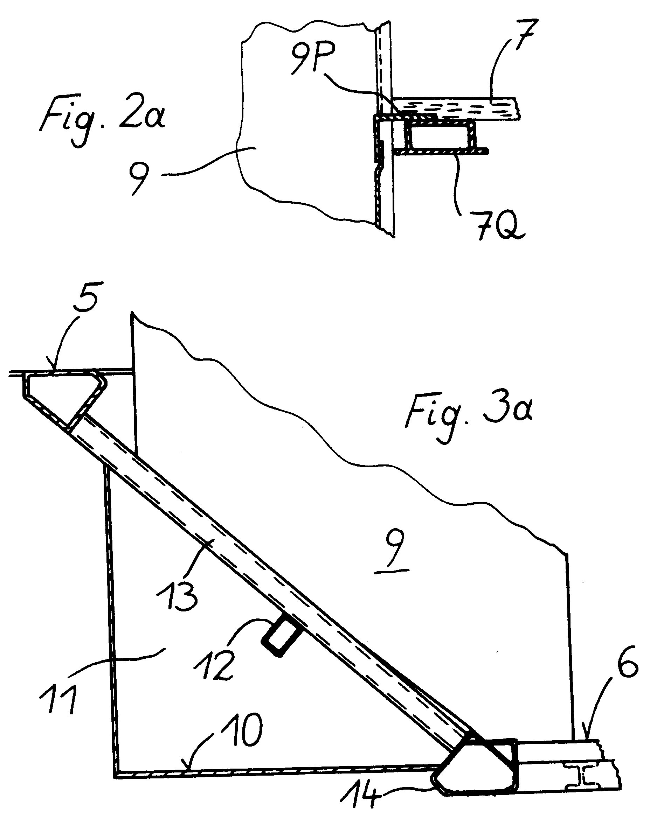

Die in **Figur 2** gezeigte Querschnittansicht des Rohbaus des Doppelstockwagens 1 skizziert dessen von den Böden des Unterdecks 6 und des Oberdecks 7, den Außen-Seitenwänden und dem Dach gebildete Umrisse. Symmetrisch zu der vertikalen Längsmittelebene des Fahrzeugs steht der Liftschacht 9, der die Ebene des Oberdecks durchdringt.

Die zum Doppelstockbereich weisende Stirnwand des Liftschachts 9 stößt, wie das Detail in **Figur 2a** zeigt, in der Mittenebene einseitig an einen Querträger 7Q, welcher die beiden Außen-Seitenwände in Höhe des Knicks miteinander verbindet. Dieser ist zur Endraum 2 hin der letzte durchgehende Querträger im Boden 7 des Oberdecks. Über einen am Liftschacht 9 befestigten Profilschenkel 9P besteht eine relativ weiche Anbindung zwischen der Oberseite des Querträgers 7Q und der Liftschacht-Stirnwand. Letztere ist im übrigen jeweils in Bodennähe der beiden Decks mit in Fig. 2 gestrichelt angedeuteten Zugangsöffnungen 9Z versehen, durch welche der Lift be- und entladen werden kann. Im Einstiegsbereich ist die Zugangsöffnung hingegen in der anderen, zum Wagenende hin weisenden Stirnwand etwa auf halber Höhe zwischen den hier angedeuteten Öffnungen vorgesehen.

Die Zugangsöffnungen sind speziell für das Handling einer Minibar zugeschnitten. Die Unterkante jeder Zugangsöffnung soll wenigstens annähernd auf dem Niveau des angrenzenden Innenbodens liegen, so daß die Minibar bei zum Be- und Entladen positionierter Plattform der Hebevorrichtung problemlos durch jede der Zugangsöffnungen gerollt werden kann.

Insgesamt bilden der Liftschacht 9 bzw. dessen tragende Wände und Eckprofile eine Zugstrebe zwischen dem Dach und dem Unterdeckboden bzw. der Übergangsschräge 5.3 und tragen damit zur Eigensteifigkeit des Wagenkastens insbesondere bei Aufprallstößen bei.
Eine geringe Verwindung des Wagenkastens und des Liftschachts z. B. beim Befahren von Überhöhungsrampen kann jedoch nicht ausgeschlossen werden; aus diesem Grund sind zur Führung der hier nicht dargestellten Hebevorrichtung innerhalb des Liftschachts vorzugsweise nur an einer der Schachtinnenseiten Führungsschienen vorgesehen, um ein Klemmen der Hebevorrichtung auch bei zulässigen geringfügigen Verwindungen des Liftschachts zu verhindern. In der Dachwölbung bleibt noch genügend Platz für den Antrieb der Hebevorrichtung.
Die nicht durch Zugangsöffnungen durchbrochenen, sich in Fahrzeuglängsrichtung erstreckenden Seitenwände des Liftschachts 9 sind großflächige geschlossene Bleche, die zur Erhöhung ihrer Biege- und Verwindungssteifigkeit im Rahmen des verfügbaren Raums im vertikalen Längsverlauf geringfügig stumpfwinklig abgeknickt werden. Damit werden Eigenschwingungen dieser Flächenteile wirksam gedämpft.

Die stirnseitige Außenansicht des Wagenkastens des Doppelstockwagens 1 gemäß **Figur 3** und die Schnittansicht in **Figur 3a** verdeutlichen die Eingliederung des Unterteils des Liftschachts 9 bzw. des prismatischen Bodenkastens 11 mit dem Boden 10 in die Wagenkasten-Tragstruktur im Bereich der Übergangsschräge 5.3.

Dort sind Versteifungen in Gestalt von Querstreben 12 und zwei beidseitig nahe der Längsmitte verlaufenden Unterzügen 13 zusätzlich zu den üblichen Außenlangträgern vorgesehen. Die Unterzüge 13 verlaufen mit Abstand nebeneinander parallel zu der Übergangsschräge 5.3 und verbinden die Ebene 5 des Einstiegsraums mit dem Rahmen 14 des Bodens des Unterdecks 6. Der Abstand zwischen den Unterzügen 13 ist durch die Breite der Schmalseiten bzw. Stirnwände des Liftschachts 9 bestimmt.
Durch die Querstreben 12 sind sie jeweils mit Außenträgern 15 verbunden. Dabei dienen die hauptsächlich auf Zug belasteten Querstreben der Stabilisierung der Außenträger gegen seitliches Ausknicken in einer Abwinkelung 15W. Die Unterzüge 13 sind als geschlossene Hohlprofile ausgeführt und werden bei Zugbeanspruchung der Querstreben 12 wegen deren einseitiger, außermittiger Anbindung hauptsächlich auf Torsion belastet. Die Abwinkelung 15W der Außenträger 15 ermöglicht eine optimale Ausnutzung des Lichtraumprofils im Unterbodenbereich des Fahrzeugs.

Wie man besser aus Figur 3a erkennt, sind die durchgehenden Seitenwände des Liftschachts auf die Oberseite der Unterzüge 13 aufgesetzt und mit diesen - vorzugsweise durch Schweißen - fest verbunden, während der Bodenkasten 11 an den Unterseiten der Unterzüge 13 und einseitig am Rahmen 14 des Unterbodens befestigt ist.

Insgesamt wird der eng in die Wagenstruktur eingegliederte Liftschacht 9 mit dieser Anordnung von horizontalen Kräften weitestgehend freigehalten.

Der Bodenkasten 11 wird vorzugsweise mit einem größeren horizontalen Querschnitt als der im Fahrzeuginneren befindliche Liftschacht 9 ausgeführt, um Platz zum Anbringen von Isoliermaterial zu schaffen, das einer Dämpfung von Laufgeräuschen des dem Bodenkasten 11 unmittelbar benachbarten Fahrwerks dient und auch wärmeisolierend eine Kältebrücke zwischen dem Fahrgastraum und der Wagenaußenseite verhindert.

## Patentansprüche

1. Mehrstöckiges Schienenfahrzeug (1) mit einem Lifteinbau mit einer Hebevorrichtung für den Transport von Gegenständen zwischen auf verschiedenen horizontalen Ebenen (5,6,7) des Fahrzeugs liegenden Räumen, zu deren Führung ein vertikal verlaufender geschlossener Liftschacht (9) vorgesehen ist, der auf jeder der horizontalen Ebenen eine Zugangsöffnung (9Z)zum Be- und Entladen der Hebevorrichtung aufweist, wobei das Unterteil des Liftschachts (9) bzw. eines prismatischen Bodenkastens (11) mit dem Boden (10) in die Wagenkasten-Tragstruktur im Bereich einer Übergangsschräge (5.3) zwischen dem Boden der mittleren Ebene (5) zum Boden des Unterdecks (6) eingegliedert ist und der Liftschacht (9) unmittelbar neben wenigstens einer zu einer der horizontalen Ebenen (6,7) führenden Treppe (5.1,5.2) angeordnet ist, und die Unterkanten der Zugangsöffnungen (9Z) zum Be- und Entladen der Hebevorrichtung, insbesondere zum Befahren mit einem handschiebbaren Servicefahrzeug (Minibar), jeweils auf dem Niveau des angrenzenden Innenbodens (5,6,7) liegen, dadurch gekennzeichnet, dass
- der Liftschacht (9) symmetrisch zur Wagenlängsmitte angeordnet ist,
- sein Unterteil beidseitig von schräg laufenden Unterzügen (13) der Übergangsschräge (5.3) flankiert ist, auf welche die Seitenwände des Liftschachts (9) aufgesetzt sind, und
- der Boden (10) des Liftschachts (9) sich in horizontaler Ebene unterhalb der Unterzüge (13) befindet und den unteren Abschluss des prismatischen, an den Unterzügen (13) befestigten Bodenkastens (11) bildet.

2. Schienenfahrzeug nach Anspruch 1, dadurch gekennzeichnet, dass der Liftschacht (9) zwischen einer von einer Mittel- oder Einstiegsebene (5) nach unten zu einem Unterdeck (6) und einer nach oben zu einem Oberdeck (7) führenden Treppe (5.1,5.2) angeordnet ist, wobei in beiden Decks (6,7) sowie in der Mittelebene (5) Zugangsöffnungen vorgesehen sind.

3. Schienenfahrzeug nach Anspruch 1 oder 2, dadurch gekennzeichnet, dass das Unterteil des Liftschachts (9) und dessen Boden (10) in einen Übergangsbereich (5.3) des Wagenkastens zwischen einem Einstiegsbereich (5) und deren unteren Ebene (6) eingefügt sind.

4. Schienenfahrzeug nach Anspruch 3, dadurch gekennzeichnet, dass die Unterzüge (13) mittels Querstreben (12) mit Außenträgern (15) verbunden sind, wobei die Querstreben (12) durch Längs-, insbesondere Zugkräfte belastbar sind und die den Liftschacht (9) flankierenden Unterzüge (13) zur Aufnahme dieser Längskräfte vorgesehen sind.

5. Schienenfahrzeuge nach Anspruch 4, dadurch gekennzeichnet,
- dass der Bodenkasten (11) mit größerer lichter Innenweite als der Liftschacht (9) ausgeführt ist und
- seine Innenwände mit Dämmmaterial zur Schall- und Wärmeisolierung ausgekleidet sind.

6. Schienenfahrzeug nach Anspruch 2, dadurch gekennzeichnet, dass die Zugangsöffnung im Einstiegsbereich (5) auf einer den Zugangsöffnungen der anderen Ebenen (6,7) gegenüberliegenden Seiten des Liftschachts (9) angeordnet sind.

7. Schienenfahrzeug nach einem der vorstehenden Ansprüche, dadurch gekennzeichnet, dass die Seitenwände des Liftschachts (9) als zugübertragende Versteifungselemente des Wagenkastens ausgeführt sind, welche den Unterboden des Wagenkastens mit dem Wagendach fest verbinden.

8. Schienenfahrzeug nach Anspruch 7, dadurch gekennzeichnet, dass zwei einander gegenüberstehende vertikale Seitenwände des Liftschachts (9) durch geschlossene Bleche gebildet sind, welche zumindest einen längslaufenden stumpfwinkligen Knick zur Erhöhung ihrer Steifigkeit aufweisen.

9. Schienenfahrzeug nach Anspruch 7 oder 8, dadurch gekennzeichnet, dass Führungsschienen für die Hebevorrichtung nur an einer der geschlossenen Seitenwände des Liftschachts (9) vorgesehen sind.

## Claims

1. Multi-storey rail vehicle (1) with a lift installation with a lifting device for the transportation of objects between spaces situated on different horizontal planes (5, 6, 7) of the vehicle, for the guidance of which lifting device a vertically extending closed lift shaft (9) is provided which has an access opening (9Z) on each of the horizontal planes for loading and unloading the lifting device, the lower part of the lift shaft (9) and of a prismatic bottom tank (11) being incorporated by its bottom (10) into the supporting structure of the coach body in the region of a transitional slope (5.3) between the floor of the central plane (5) and the floor of the lower deck (6) and the lift shaft (9) being arranged directly next to at least one stair (5.1, 5.2) leading to one of the horizontal planes (6, 7), and the lower edges of the access openings (9Z) for loading and unloading the lifting device, in particular for access with a service vehicle (mini bar) which can be pushed by hand, in each case lying on the level of the adjoining internal floor (5, 6, 7), characterized in that
- the lift shaft (9) is arranged symmetrically with respect to the longitudinal centre of the coach,
- its bottom part is flanked on both sides by obliquely extending bearers (13) of the transitional slope (5.3), on which bearers the side walls of the lift shaft (9) are mounted, and
- the floor (10) of the lift shaft (9) is situated in a horizontal plane below the bearers (13) and forms the bottom seal of the prismatic bottom tank (11) secured on the bearers (13).

2. Rail vehicle according to Claim 1, characterized in that the lift shaft (9) is arranged between a stair (5.1) which leads down from a central or boarding plane (5) to a lower deck (6) and a stair (5.2) which leads up to an upper deck (7), access openings being provided in both decks (6, 7) and in the central plane (5).

3. Rail vehicle according to Claim 1 or 2, characterized in that the lower part of the lift shaft (9) and its floor (10) are fitted into a transitional region (5.3) of the coach body, between a boarding region (5) and its lower plane (6).

4. Rail vehicle according to Claim 3, characterized in that the bearers (13) are connected to outer bearers (15) by means of cross-members (12), the crossmembers (12) being loadable by longitudinal forces, in particular tensile forces, and the bearers (13) flanking the lift shaft (9) being provided to take these longitudinal forces.

5. Rail vehicle according to Claim 4, characterized in that
- the bottom tank (11) is designed with a larger clear inside width than the lift shaft (9) and
- its inner walls are lined with insulating material for noise and heat insulation.

6. Rail vehicle according to Claim 2, characterized in that the access opening in the boarding region (5) is arranged on the side of the lift shaft (9) opposite the access openings of the other planes (6, 7).

7. Rail vehicle according to one of the preceding claims, characterized in that the side walls of the lift shaft (9) are designed as tension-transmitting reinforcing elements of the coach body which connect the under-body of the coach body firmly to the coach roof.

8. Rail vehicle according to Claim 7, characterized in that two mutually opposite vertical side walls of the lift shaft (9) are formed by continuous metal sheets which have at least one longitudinal obtuse-angled bend to increase their stiffness.

9. Rail vehicle according to Claim 7 or 8, characterized in that guide rails for the lifting device are provided on only one of the continuous side walls of the lift shaft (9).

## Revendications

1. Véhicule ferroviaire à plusieurs étages (1) avec une installation d'ascenseur, avec un dispositif élévateur pour le transport d'objets entre des locaux situés à différents niveaux horizontaux (5, 6, 7) du véhicule, pour le guidage duquel il est prévu une cage d'ascenseur (9) fermée verticale, qui présente à chacun des niveaux horizontaux une ouverture d'accès (9Z) pour le chargement et le déchargement du dispositif élévateur, dans lequel la partie inférieure de la cage d'ascenseur (9), respectivement d'un caisson de fond prismatique (11), est insérée avec le fond (10) dans la structure portante de la caisse de la voiture dans la région d'une rampe de transition (5.3) entre le sol du niveau intermédiaire (5) et le sol de l'étage inférieur (6) et la cage d'ascenseur (9) est disposée immédiatement à côté d'au moins un escalier (5.1, 5.2) conduisant à un des niveaux horizontaux (6, 7), et les bords inférieurs des ouvertures d'accès (9Z) pour le chargement et le déchargement du dispositif élévateur, en particulier pour y accéder avec un véhicule de service (minibar) manoeuvrable à la main, sont respectivement situés au niveau du plancher intérieur voisin (5, 6, 7), caractérisé en ce que
- la cage d'ascenseur (9) est disposée de façon symétrique par rapport au milieu longitudinal de la voiture,
- sa partie inférieure est flanquée de part et d'autre de tirants obliques (13) de la rampe de transition (5.3), sur lesquels sont posées les parois latérales de la cage d'ascenseur (9), et
- le fond (10) de la cage d'ascenseur (9) se trouve dans un plan horizontal en dessous des tirants (13) et forme le fond inférieur du caisson de fond prismatique (11) fixé aux tirants (13).

2. Véhicule ferroviaire suivant la revendication 1, caractérisé en ce que la cage d'ascenseur (9) est disposée entre un escalier (5.1) conduisant d'un niveau intermédiaire ou d'entrée (5) vers le bas, à un étage inférieur (6), et un escalier (5.2) conduisant vers le haut, à un étage supérieur (7), des ouvertures d'accès étant prévues aux deux étages (6, 7) ainsi qu'au niveau intermédiaire (5).

3. Véhicule ferroviaire suivant la revendication 1 ou 2, caractérisé en ce que la partie inférieure de la cage d'ascenseur (9) et son fond (10) sont insérés dans une zone de transition (5.3) de la caisse de la voiture entre une zone d'entrée (5) et le niveau inférieur (6).

4. Véhicule ferroviaire suivant la revendication 3, caractérisé en ce que les tirants (13) sont reliés par des traverses (12) à des poutres extérieures (15), les traverses (12) pouvant être sollicitées par des efforts longitudinaux, en particulier de traction, et les tirants (13) flanquant la cage d'ascenseur (9) étant prévus pour reprendre ces efforts longitudinaux.

5. Véhicule ferroviaire suivant la revendication 4, caractérisé en ce que le caisson de fond (11) est réalisé avec une largeur intérieure libre plus grande que la cage d'ascenseur (9), et
- ses parois intérieures sont garnies de matière absorbante pour l'isolation phonique et thermique.

6. Véhicule ferroviaire suivant la revendication 2, caractérisé en ce que l'ouverture d'accès dans la zone d'entrée (5) est disposée dans un côté de la cage d'ascenseur (9) opposé aux ouvertures d'accès des autres niveaux (6, 7).

7. Véhicule ferroviaire suivant l'une quelconque des revendications précédentes, caractérisé en ce que les parois latérales de la cage d'ascenseur (9) sont réalisées comme des éléments raidisseurs de la caisse de la voiture, transmettant les efforts de traction, qui relient solidement le fond de la caisse de la voiture au toit de la voiture.

8. Véhicule ferroviaire suivant la revendication 7, caractérisé en ce que deux parois latérales verticales, opposées l'une à l'autre, de la cage d'ascenseur (9) sont formées par des tôles fermées, qui présentent au moins un pli longitudinal à angle obtus pour augmenter leur rigidité.

9. Véhicule ferroviaire suivant la revendication 7 ou 8, caractérisé en ce qu'il n'est prévu des rails de guidage pour le dispositif élévateur que dans une seule des parois latérales fermées de la cage d'ascenseur (9).
